# EUROPÄISCHE PATENTANMELDUNG

(11) **EP 0 698 421 A1**
(43) Veröffentlichungstag der Anmeldung: **28.02.1996**
(21) Anmeldenummer: 94113050.2
(22) Anmeldetag: 22.08.1994
(51) Int. Cl.: B05B 15/12, B05B 15/04

(54) **Kombinierte Pulverrückgewinnung mit Zyklon oder Filter sowie Pulverförderung mit einer Walze bei Zyklonbetrieb**

(71) Anmelder: Bauer, Erich, D-78351 Bodman-Ludwigshafen (DE)
(72) Erfinder: Bauer, Erich, D-78351 Bodman-Ludwigshafen (DE)

(57) **Zusammenfassung**

Die kombinierte Pulverrückgewinnung besteht aus einem Zyklon (2) und einem Nachfilter (3). Mit der Abdichtungstür (10) wird nach Bedarf Zyklon- oder Filterbetrieb eingestellt. Durch diese kurzfristige Umstellung ist ein sehr schneller Farbwechsel möglich. Die zusätzliche Lamellen-Walze (14) im Zyklon (2) ermöglicht eine kontinuierliche direkte Zufuhr von Pulver während des Betriebes in das Unterdrucksystem der Zyklonrückgewinnung durch die luftdichten Lamellenkammern (15). Mit diesem System wird Rest-und neues Pulver einfach, schnell und preisgünstig in den Pulverkreislauf eingeführt.

## Beschreibung

Die Erfindung bezieht sich in der Pulverrückgewinnung auf einen schnellen Farb-Wechsel entweder mit Zyklon oder mit Filter sowie einen direkten Pulvertransport vom Kabinenboden mit einer Lamellen-Walze in den Pulverbehälter bei Zyklonbetrieb.

Es gibt kompakte Pulverkabinen für Umluftbetrieb entweder mit Zyklon- oder mit Filterrückgewinnung.
- Die **Vorteile** einer Kabine mit **Filterrückgewinnung** sind die einfache Abscheidung des Pulvers aus dem Pulver-Luftgemisch über den Filter sowie das abgelagerte Restpulver aus der Kabine mittels Schaber oder Förderband direkt in den Pulverbehälter. Die hohe Rüchgewinnungsrate liegt bei ca. 99,9%.
- Als **Nachteil** ist ein hoher Zeitaufwand für einen Farbwechsel bzw. Reinigung der Filterelemente, d.h. die Filterrückgewinnung eignet sich gut für seltenen oder keinen Farbwechsel.
- Der Vorteil einer Kabine mit **Zyklonrückgewinnung** liegt im schnellen und einfachen reinigen des Zyklons bei Farbwechsel und eignet sich somit gut für häufigen Farbwechsel. Der Nachfilter wird dabei nicht gereinigt und enthalt nur Restpulver.
- Als **Nachteil** ist die nur 95 - 99%ige Rockgewinnung, der Rest geht als Mischpulver in den Nachfilter. Der Anschaffungspreis ist aufgrud des Zyklons höher. Der Nachfilter des Zyklons entspricht im Aufwand der obigen Filterrückgwinnung. Aufgrund des geschlossenen Pulver-Luftkreislaufes (Zyklon, Pulverbehälter, Nachfilter) befindet sich im Pulverbehälter ein Unterdruck, d.h. das gesamte Restpulver wird über den Zyklon abgeschieden. Es besteht keine Einrichtung, das Restpulver vom Kabinenboden direkt in den Pulverbehälter zu fördern.

Gegenstand der Erfindung ist eine Pulverrückgewinnung so zu bauen, daß
- bei einer Zyklonanlage der Nachfilter bei Bedarf direkt an die Kabine als Filterrückgewinnung angeschlossen werden kann. Der Zyklon ist in diesem Fall ohne Funktion. Mit dieser Kombination kann eine Filter-oder Zyklonrückgewinnung betrieben werden. Wird zuerst eine Filterrückgewinnung installiert, kann preiswert ein Zyklon nachgerostet werden. Umgekehrt enthält die Zyklonrückgewinnung bereits die Filterrückgewinnung.
- das abgelagerte Restpulver auf dem Kabinenboden (ca. 20-50%) beim Zyklonbetrieb direkt über eine Walze in den Pulverbehälter gefördert werden kann. Diese Rückgewinnung liegt bei ca. 99,9% und ermöglicht zusätzlich eine einfache und preiswerte Zudosierung von Frischpulver während des Betriebes in den Pulverkreislauf.
Bei dieser Neukonzeption sind die Baumaße so abgestimmt, daß eine Zyklon- oder/und Filterrückgewinnung an die Kabinenöffnung paßt und die Pulverbehälter ausgetauscht werden können. Dadurch entsteht eine schnelle Austauschbarkeit bei unterschiedlicher Anwendung zu wesentlich reduzierten Anschaffungskosten. Dies ist außerordentlich wichtig bei kurzfristigem Farbwechsel für einzelne Teile im Zyklonbetrieb, es muß nur der Nachfilter an der Kabine angeschlossen werden dabei wird der Zyklon nicht benutzt und nicht gereingt. Der Zyklon kann anschließend mit der alten Farbe weiter benutzt werden.

Fig. 1 zeigt eine Pulverkabine mit Zyklon und Nachfilter sowie die Pulverförderung mit der Lamellen-Walze im Schnitt. Die Nachfiltereinheit ist in der Zeichnung um 90° zur besseren Funktionsdarstellung versetzt.

Fig. 2 zeigt die Draufsicht mit angeschlossenem Zyklon (unten) und Nachfilter (oben). In der Mitte ist die Abdichtungstür, die je nach Betriebsart den Nachfilter oder Zyklon abdeckt.

Fig. 3 zeigt im Ausschnitt die Funktion und den Aufbau der Pulverförderung mit der Lamellen-Walze in den Pulverbehälter unter dem Zyklon.

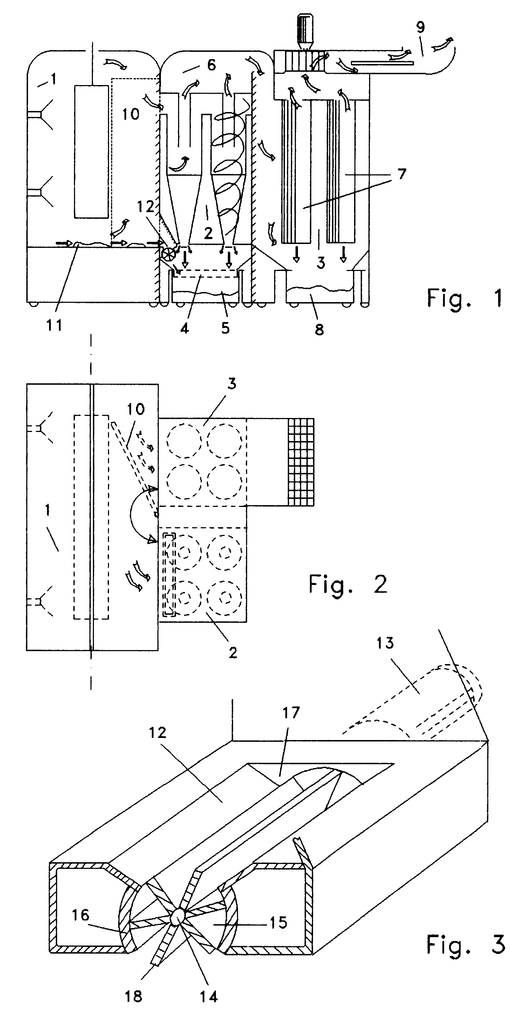

In Fig. 1 wird das Pulver-Luftgemisch oben von der Kabine 1 Ober den Zyklon 2 und Nachfilter 3 angesaugt und im Zyklon in Pulver und leicht angereichertes Pulver-Luftgemisch getrennt. Das Pulver fällt über die Siebmaschine 4 in den Pulverbehälter 5. An diesem Pulverbehälter 5 befinden sich Injektoren, die das Pulver an die Sprüheinrichtung zurückführen. Das leicht angereicherte Pulver-Luftgemisch wird über den Luftverbindungskanal 6 von der Nachfiltereinheit 3 angesaugt und über die Filter 7 total gereinigt. Die Filter 7 werden über ein Zeitglied von Innen mit Druchluft gereingt, das abgestoßene Pulver fällt dann in den Mischpulverbehälter 8 (Mischpulver mit unterschiedlichen Farben über mehrere Charchen). Die gereinigte Luft tritt dann über den Abluftkanal 9 als Umluft in den Produktionsraum zurück. In diesem Zustand schließt die Abdichtungstür 10 den Nachfilter luftdicht von der Kabine ab. Das beim Beschichten abgefallene Pulver 11 auf dem Kabinenboden wird mittels Schaber, Förderband oder Rüttler in die Pulverwalzenmulde 12 transportiert. Die mit einem außen befestigten Motor 13 (Fig. 3) angetriebenen Walze 14 fördert bei kontinuierlicher langsamer Drehzahl das Pulver über die Lamellenkammern 15, in die Siebmaschine 4 und in den Pulverbehälter 5. Die Walze ist links und rechts über das Rohrstück 16 und an den beiden Stirnseiten 17 mit den Lamellen 18 so abgedichtet, daß der Unterdruck im Zyklonsystem nicht unterbrochen wird (keine falsche Ansaugung).

Die Fig. 2 zeigt den Zyklon mit Nachfilter in der Draufsicht. Die Kabine kann in dieser Anordnung entweder mit Zyklon- oder mit Filterbetrieb arbeiten. Die Abdichtungstür 10 verschließt die nicht gewünschte Funktion.
Wird der Zyklon 2 mit der Abdichtungstür 10 geschlossen, öffnet sich der Nachfilter 3 mit der Filterkammer zur Kabineninnenseite. In diesem Zustand ist Filterbetrieb mit dem Nachfilter 3 des Zyklons. Der Zyklon 2 ist ohne Funktion. Bei Zyklonbetrieb wird mit der Abdichtungstür 10 die Filterkammer zu der Kabineninnenseite geschlossen. Dabei wurde der Filterbetrieb als Nachfilter für den Zyklon umgestellt.

## Patentansprüche

1. Kombinierte Pulverrückgewinnung, bestehend aus Zyklon (2) und Nachfilter (3), die je nach Bedarf zusammen als Zyklonrückgewinnung oder bei Abdichtung des des Zyklons als reine Filterrückgewinnung betrieben wird. Dies wird erreicht durch die Abdichtungstür (10), mit der die nicht gewünschte Funktion am Zyklon (2) oder Nachfilter (3) abgedichtet wird. Bei dieser Ausführung hat die Kabinenrückwand eine Öffnung für den Zyklon (2) und eine Öffnung für den Nachfilter (3).

2. Kombinierte Pulverrückgewinnung gemäß Anspruch 1, dadurch gekennzeichnet, daß an nur einer Kabinenöffnung für die Rückgewinnung entweder der Zyklon (2) oder der Nachfilter (3) angeschlossen und betrieben werden kann.

3. Kombinierte Pulverrückgewinnung gemäß Anspruch 1, dadurch gekennzeichnet, daß der Nachfilter (3) auch einzel als reiner Filterbetrieb eingesetzt werden kann. Diese Anlage kann zu einem späterem Zeitpunkt mit einem Zyklon (2) erweitert und wechselseitig betrieben werden wie Anspruch 1.

4. Pulverrückgewinnung mit einer zusätzlichen Lamellen-Walze bei Zyklonbetrieb, dadurch gekennzeichnet, daß das abgelagerte Pulver (11) auf dem Kabinenboden mittels Schaber, Förderband oder Rüttler auf die Lamellen-Walze (14)transportiert wird. Die Lamellen-Walze (14) dreht sich kontinuierlich durch den außenliegenden Motor (13) und fördert dabei das Pulver über die Lamellen-Kammern (15), die Siebmaschiene (4) in den Pulverbehälter (5). Die Außenkanten der Lamellen streifen wechselweise über die Rohrführung (16) und die Stirnflächen (17) und dichten dabei die Lamellen-Kammer (15) zu dem Unterdruck im Zyklonbetrieb ab. Über die Lamellenwalze kann zusätzlich neues Pulver direkt während des Betriebes in den Pulverbehälter (5) ohne Störung des Unterdrucks nachgefüllt werden.

5. Pulverrückgewinnung gemäß Anspruch 4, dadurch gekennzeichnet, daß statt einer Lamellen-Walze (14) auch eine Schnecken,-oder Schraubenwalze, Paternoster, Scheiben- oder Klappenförderung eingesetzt werden kann.
